# EUROPEAN PATENT APPLICATION

(11) **EP 2 518 639 A1**
(43) Date of publication of application: **31.10.2012**
(21) Application number: 09852479.6
(22) Date of filing: 23.12.2009
(51) Int. Cl.: G06F 17/27, G06F 17/30

(54) **METHOD AND DEVICE FOR PROCESSING CONTINUOUS QUERIES**

(71) Applicant: Uribe-etxebarria Jimenez, Xabier, 48950 Erandio-Bilbao (ES)
(72) Inventor: Uribe-etxebarria Jimenez, Xabier, 48950 Erandio-Bilbao (ES)
(74) Representative: Elzaburu Marquez, Alberto
(86) International application number: PCT/ES2009/070625
(87) International publication number: WO 2011/076961

(57) **Abstract**

A method for processing continuous queries in natural language received from a client machine (11-i) connected to a second applications server (14) for continuous queries by means of a first application server and a telecommunications network (12); comprising the steps of receiving first text data in natural language in a processing unit (21), arranged in accordance with the linguistic rules of the natural language of a query posed, to supply second text data in an intermediate language based on the first text data in natural language, the generation of third text data in natural language in a dialogue unit (23), arranged in accordance with the linguistic rules of the natural language of a reply message, based on the second text data in the intermediate language received from the processing unit (21) and the issuing of the reply message to the client machine (11-i) by means of a first application server and a telecommunications network (12).

## Description

### FIELD OF THE INVENTION

This invention refers, in general, to a procedure to respond to continuous queries received and to generate dialogues in a help service for a provider of different types of services.

### STATE OF THE ART

In general, service providers provide remote help services to users/clients of the aforementioned service providers, by means of help systems attended by people and/or computers.

It is also known that, in the event that these help systems are provided by means of computers, the client/user experience is unsatisfactory. This fact has been reflected recently in a radio advertising campaign.

Therefore, help systems provided by means of computers show disadvantages with respect to those help systems where the requests, questions, problems, etc. raised by clients are responded to by people.

The disadvantage of help systems provided by machines derives from inefficiency in analysis and/or misunderstanding the query made by the client.

One way to improve the client/user experience has been for the client to make a query by means of a controlled or guided language shown to him or her on an audiovisual screen and/or in a question/answer machine or system.

These types of systems in turn have the disadvantage that different types of queries cannot be resolved and/or responded to as they are not included in the controlled language stored in the help system.

Consequently, the client/user experience is unsatisfactory and these types of help systems provided by means of computers are rejected by the service owner's clients/users.

This fact is acknowledged in society, such that a service provider company, aware of its clients' bad experiences, advertises its help system as being provided by people to avoid the problems which occur when the help system is provided by computers.

### DESCRIPTION OF THE INVENTION

This invention seeks to resolve or reduce one or more of the aforementioned disadvantages by means of a processing method for continuous queries as defined in the claims.

According to one embodiment, a method for processing continuous queries received from a client machine in natural language comprises the stages of receipt in a natural language processing unit of first text data arranged in accordance with the linguistic rules of the natural language, extraction in the processing unit of second text data in an intermediate language relating to the first text data in the natural language and supply from a dialogue unit of third text data in natural language arranged in accordance with the linguistic rules of the natural language according to the second data in the intermediate language.

The method also comprises the step of supplying the third data in natural language to a service provider's first application server unit.

In another embodiment, the method comprises the step of supplying the second text data in an intermediate language to the first application server in the absence of supplying third text data.

The third text data in natural language are supplied in XML, POST, GET, SOAP, Html, Web Service or similar languages.

### BRIEF DESCRIPTION OF THE FIGURES

A more detailed explanation of the devices and/or methods in accordance with the embodiments of the invention is given in the following description based on the attached figures, in which:

Figure 1 schematically shows a continuous query processing system in a block diagram; and

Figure 2 schematically shows an embodiment of a continuous query application server in a block diagram.

### MODES OF EMBODIMENT OF THE INVENTION

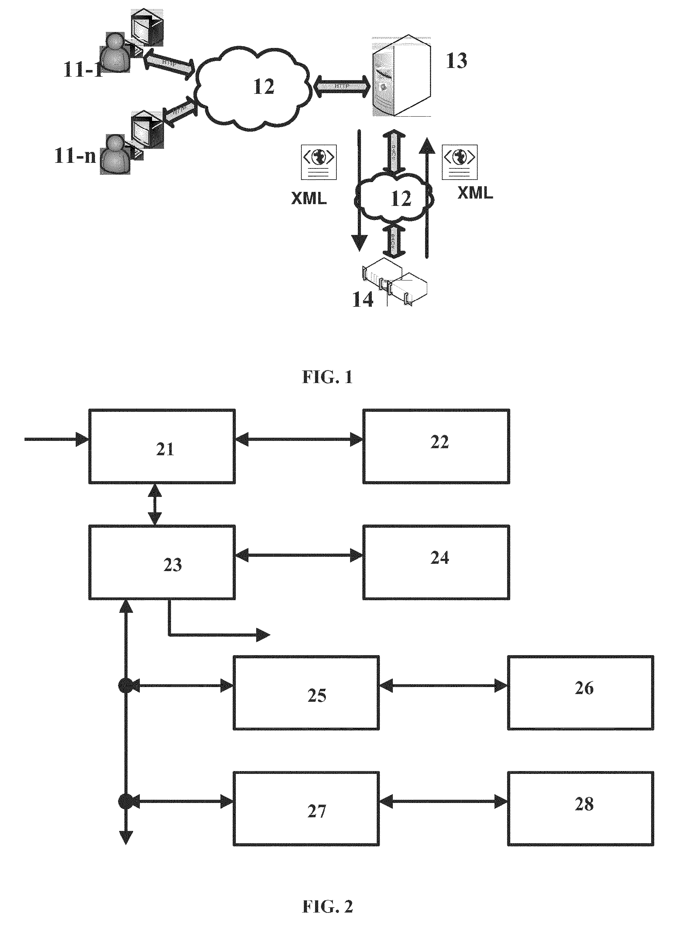

In relation to Figure 1, a set of client machines 11-i, where i = 1, ..., n, are connected by means of a telecommunications network 12 to a service provider's first help application server 13 which, in turn, is connected by means of a telecommunications network 12 to a second application server 14 which receives and processes continuous queries made to the first application server 13 from a client machine 11-i.

A client/user issues a query from a client machine 11-i to the first server 13 which must issue a reply message. The first server 13 diverts the query posed to the second server 14 which analyses it and supplies the corresponding reply to the query.

It must be noted that the communication between the first 13 and the second server 14 takes place using a communications protocol of the XML, POST, GET, SOAP, Html, Web Service, etc type.

The query can be made by the client by means of a text message, virtual person, avatar or voice message. In the latter case, the query is supplied to a voice processing unit, which generates a flow of text data relating to the voice message sent. Similarly, the text message is also converted into a flow of text data which is supplied to the second server 14.

In any case, the query posed using a source natural language comprises an ordered collection of words or terms which forum a sentence in the aforementioned language. For example, "a return ticket Madrid-Paris for the 9^{th} of this month, for one passenger".

The query is made in a natural language in an open manner, not controlled or limited to a plurality of words which can be selected from a set of words proposed by the service provider.

In relation now to Figure 2, the second server 14 receives a first flow of text data through a natural language processing unit 21.

The natural language processing unit 21 performs an analysis on the first text data relating to the sentence in the source language to determine the morphological, syntactic, semantic, pragmatic and functional characteristics of each of the items of text data in the sentence of the query posed.

The processing unit 21 performs an ontological, morphological, syntactic, semantic, pragmatic and functional analysis directly on the text data received to determine the meaning of each term in the linguistic expression with regard to the query received. Before starting this analysis, the processing unit 21 may check the spelling in the query received.

The processor 21 is connected to a first ontology unit 22 which comprises rules and data stored on a storage medium to perform the ontological analysis according to the stored rules. The result of this analysis is that each item of text in the query sentence(s) received is transformer into a matrix of concept data which has specific characteristics depending on the term or word and/or sequence of words - a step is known as semantic disambiguation, in which the processor 21 acts according to the particular linguistic guidelines or rules stored in the first ontology unit 22 - by assigning a meaning fro among the possible interpretations of the item of text analysed, whether morphosyntactic, semantic, pragmatic or functional, whichever is most appropriate taking into account the context in which the term or item of text referred to appears.

Therefore, the processor 21 performs a morphosyntactic and semantic or lexical disambiguation process on the query text. The resolution of semantic or lexical disambiguation is reduced by means of access to the first ontology unit 22, which stores knowledge in the form of collections of text or information repositories based on which matches or occurrences of context can be found in which an item of text, word and/or an ordered set of text data or a phrase can be found, helping the processor 21 to resolve possible semantic ambiguities. Ambiguity can be caused by the plurality of meanings of the same word or phrase, semantic ambiguity and, specifically, lexical ambiguity.

The result of the aforementioned automatic semantic disambiguation analysis is a second flow of text data in a metalanguage or intermediate language represented by a grammatical structure which maintains the sentence's orphosyntactic, semantic and pragmatic features in the source language, but disambiguated, i.e. where the possible ambiguities of each linguistic form have been resolved.

The grammatical structure of the second text data in the intermediate language is supplied to a dialogue generation unit 23 for this to generate and issue a third flow of text data corresponding to a reply message to the query raised.

The dialogue unit 23 transmits the second text data to a knowledge unit 25 connected to a third ontology unit 26 which, likewise, stores rules and text data in a storage unit or database, to extract the concepts associated with the second text data, in order to identify a match between the second text data received and any set of stored second text data which has a reply message associated. The knowledge unit 25 supplies this selectable reply message to the dialogue unit 23 for the latter to issue a reply message, as third text data, based on the stored message.

It can be said that the knowledge unit 25 is a unit for reply/question generation and that the dialogue unit 23 generates a complete reply message to the query received. If there is no match, the dialogue unit 23 can divert the query to a help server operated by people, such as an online chat.

On the other hand, the second text data received in the dialogue unit 23 can be transmitted independently, in turn, to an information unit 27 which extracts relevant information, which is supplied to the dialogue unit 23, based on which the latter unit 23 generates a reply message, as third text data, to the query message received from the client machine 11-i.

It must be noted that the analyses performer by the knowledge unit 25 and the information unit 27 are independent and can be performer at the same time and/or one and not the other and vice versa.

The information unit 27 is connected to a fourth ontology unit 28, including stored rules and text data in a storage unit to extract the concepts associated with the second text data in order for the information unit 27 to identify information necessary for the dialogue unit 23 to generate and supply a reply message, as third text data, in natural language to the client machine 11-i and/or through the first server 13.

In the scenario in which the second text data or concepts extracted by the information unit 27 are not sufficiently complete for the dialogue unit 23 to generate a complete reply message, the information unit 27 supplies text data to the dialogue unit 23 for the latter to generate a dialogue with the client in order to obtain additional information, additional second text data. The result of the dialogue will be the issuing of a complete reply to the query received from the client/user. The dialogue unit 23 is supported by the second ontology unit 24, rules and database, in extracting the concepts associated with the additional second text data and to be able to carry on the dialogue.

Wherever the option exists, the dialogue unit 23 can divert the query to the help server operated by people, such as an online chat.

The information unit 27 extracts information and supplies structured information to the dialogue unit 23 for the latter to request additional information or send the structured information to the first server 13 via XML, POST, GET, SOAP, Html, Web Service, etc.

Once the information unit 27 has extracted information in the form of text data, these are supplied to the dialogue unit 23 for the latter to generate the corresponding reply message, such that the ontology unit 24 determines the text data which needs to be included, the arrangement of the sentence corresponding to the reply message, as third text data, in natural language.

Based on the intermediate language, the dialogue unit 23 automatically determines a reply in the natural source language, which is an arrangement of words with meaning within a given context to which a meaning has been assigned depending on the morphological, semantic, pragmatic and functional context in which it appears within the intermediate language.

The dialogue unit 23 includes a dialogue processing unit which communicates with the second ontology unit 24 to execute a set of ontology guidelines or rules and, with the database text data, is able to supply the reply message.

The information unit 27 connected to the fourth ontology unit 28, which includes rules and database, associated with this ontology, extract information from the second text data, which in the previous example relates to concepts such as ticket, flight, number of passengers, departure city, destination city, etc., each of which terms is associated with a data matrix with predetermined characteristics. Once the terms with which a reply needs to be prepared have been selected, the text data matrices are distributed in an orderly fashion for the terms which form the reply or the response sentence.

The second text data flow, associated with concepts, represents the query received in an intermediate language or metalanguage which possesses the morphological, syntactic and semantic features of the sentence in the source language and the reply to the query posed in the natural language is prepared based on this intermediate language.

Once the second server 14 has prepared a reply, it transmits this reply message to the service provider's first server 13 according to the communications protocol used between them, for example XML, POST, GET, SOAP, Html, Web Service, etc.

The first application server 13 can receive information relating to the identification of the client/user who posed the query, the type of query, the reply supplied, structured information, etc.

In turn, the reply can be supplied to the client in different types of languages such as XML POST, GET, SOAP, Html, Web Service, etc, text, text-to-speech, virtual person, avatar, etc., from the service provider's second server 14.

Various scenarios can occur, for example the reply satisfies the client and this completes the dialogue. A second scenario arises when no reply can be given to the client. A third scenario can be when the reply does not satisfy the client. In the last two scenarios, the query can be diverted to the application server 13 so as to be attended to directly by the service provider's personnel.

The second application server can include means for automatic voice recognition, means for generating text-to-speech, an avatar or graphical representation, normally human, associated with a user. Some technologies permit the use of two- or three-dimensional virtual human representations, etc.

## Claims

1. A method of processing continuous queries in natural language received from a client machine (11-i) connected to a second application server (14) for continuous queries by means of a first application server and a telecommunications network (12); **characterised in that** it comprises the stages of
a. receipt in a natural language processing unit (21) of first text data arranged in accordance with the linguistic rules of the natural language of a query posed, to supply second text data in an intermediate language based on the first text data in natural language,
b. generation in a dialogue unit (23) of third text data in natural language arranged in accordance with the linguistic rules of the natural language of a reply message, based on the second text data in the intermediate language received from the processing unit (21), and
c. issuing of the reply message to the client machine (11-i) by means of a first application server and the telecommunications network (12) and/or directly by means of the telecommunications network (12).

2. A method as per claim 1; in which the interchange of messages in natural language between the first application server (13) and the second application server (14) takes place according to a communications protocol of the XML, POST, GET, SOAP, Html, Web Service language type or similar.

3. A method as per claim 1 or 2; in which the method comprises the step of issuing a dialogue message and/or request for information in natural language from a dialogue unit (23) to the client machine (11-i), to supply a reply message in natural language.

4. A method as per claim 1 or 2; in which the method comprises the step of extracting information by means of the information unit (27) from the second text data in the intermediate language received from the dialogue unit (23) and returning the structured extracted information to the dialogue unit (23) which is then supplied in natural language to the first server (13) via XML, POST, GET, SOAP, Html, Web Service, etc.

5. A method as per claim 1 or 2; in which the method comprises the step of issuing a reply message associated and/or questions related to third text data in natural language if a knowledge unit (25) detects a match between the second text data received which can be associated with selectable reply messages previously stored in natural language.

6. A method as per claim 1 or 2; in which the method comprises the step of transmitting the second text data to a knowledge unit (25) from the dialogue unit (23) in order to identify a match between the second text data received and any set of second text data stored which has a reply message associated, which can be supplied to the dialogue unit (23) for issuing to the client machine (11-i).

7. A method as per claim 6; in which, in the absence of a knowledge unit (25) match, the dialogue unit (23) issues a message to the first server (13) so that a help server operated by people, such as an online chat or telephone support, responds to the query made.

8. An application server for processing continuous queries in natural language received from a client machine (11-i) connected by means of a first application server and a telecommunications network (12); **characterised in that** a second application server (14) for processing continuous queries comprises a natural language processing unit (21) for first text data arranged in accordance with the linguistic rules of the natural language of a query posed, to supply second text data in an intermediate language based on the first text data in natural language to a dialogue unit (23) for third text data in natural language arranged in accordance with the linguistic rules of the natural language of a reply message, based on the second text data in the intermediate language received from the processing unit (21) and the issuing of the reply message from the second server (14) to the client machine (11-i) by means of the first application server and a telecommunications network (12).

9. A computer program which can be loaded into the internal memory of a computer with input and output units and a processing unit, where the computer program comprises executable codes configured to perform the steps of the method for processing continuous queries received from a client machine in natural language, supplying a reply to a query received from a client machine according to any of claims 1 to 7 when it is run by the computer.
